# EUROPEAN PATENT APPLICATION

(11) **EP 2 692 970 A1**
(43) Date of publication of application: **05.02.2014**
(21) Application number: 12178737.8
(22) Date of filing: 31.07.2012
(51) Int. Cl.: E05B 15/02, E05B 47/00, B64C 1/14

(54) **Door latching device and door assembly incorporating same**

(71) Applicant: Airbus Operations GmbH, 21129 Hamburg (DE)
(72) Inventor: Koch, Maik, 28865 Lilienthal (DE); Poth, Albin, 27798 Hude (DE)
(74) Representative: Isarpatent

(57) **Abstract**

The present invention provides a door latching device (1) for holding a door (11) in a latched and/or a locked state, the latching device comprising: a rotatable catch member (2) mounted for rotational movement between an engaged position, in which the catch member (2) projects for engagement with a latch member (12) of a door (11), and a disengaged position, in which the catch member (2) is retracted from engagement with the latch member (12); and a magnetic actuator (4) connected with the catch member (2) for biasing or effecting rotational movement of the catch member (2) from the disengaged position to the engaged position. The magnetic actuator (4) preferably includes a first magnet (5), which is fixed with respect to the catch member (2) for rotation therewith, and a second magnet (7) which generates a magnetic force to bias or effect rotation of the catch member (2) from the disengaged position to the engaged position.

## Description

The present invention relates to a door latching device, and especially to a magnetic door latching device for holding a door in a latched and/or locked condition, as well as to a door assembly incorporating such a door latching device.

The door latching device and door assembly of the invention are particularly designed for use in aircraft so that doors to restricted parts of the aircraft, such as to a cockpit or crew quarters, may be held closed and/or locked to prevent unauthorised access. While it will be convenient to describe the invention in this exemplary context, it will nevertheless be appreciated that a door latching device and door assembly of the invention are not limited to this application, but may be employed in a wide variety of situations, and indeed, with almost any door, gate, or barrier that shuts or closes a doorway, opening or portal.

Doors to compartments in aircraft are subject to structural constraints that are seldom found in other environments. In particular, the doors in aircraft are often not mounted in a structurally stable door frame, as is typical in a building or house. Rather, the structure that forms a frame for doors in aircraft is often dynamic and subject to flexing and other deformations as the fuselage structure of the aircraft flexes in use. Also, the design constraints of commercial aircraft lead to a weight-optimized design philosophy, which omits as many unnecessary weighty elements as possible. This results in a relatively simple frame structure, which in some cases may be limited to a single door post or vertical member at one side of the door, with the door otherwise hinged directly to a wall panel. Such design constraints, and the deformation and flexing of the frame, can readily lead to wear, chaffing, and misalignment of the parts of a door assembly.

Although the use of magnets in door latches and locks may be generally known, a need nevertheless exists for improvements which can minimize the prospects of jamming of mechanical components caused by wear, chaffing, and/or misalignment of the parts in a door latching device and door assembly.

It is therefore an object of the present invention to provide a new and improved door latching device, and particularly a magnetic door latching device, for holding a door member in a latched and/or locked state, and a door assembly system which includes such a door latching device.

In accordance with this invention, a door latching device having the features recited in claim 1 and a door assembly as recited in claim 8 are provided. Preferred features of the invention are recited in the dependent claims.

According to one aspect, therefore, the invention provides a door latching device for holding a door in a latched and/or locked state, comprising:
a rotatable catch member mounted for rotation between an engaged position, in which the catch member projects for engagement with a latch member of a door, and a disengaged position, in which the catch member is retracted from engagement with the latch member; and
a magnetic actuator connected with the catch member for biasing and/or effecting rotation of the catch member from the disengaged position to the engaged position.

In a preferred embodiment, the magnetic actuator includes at least one first magnet, which is fixed with respect to the catch member for rotation therewith, and at least one second magnet which generates a magnetic force to bias or effect rotation of the catch member from the disengaged position to the engaged position. In this regard, the second magnet is arranged to interact with the first magnet for biasing and/or effecting the rotation of the catch member. To this end, the poles of the respective first and second magnets preferably interact in attraction to bias and/or effect a rotation of the catch member. As such, the poles are preferably opposite poles (i.e. of opposite polarity). Thus, the first magnet may be fixed with respect to the catch member such that at least one of the poles of the first magnet is aligned with one of the poles of the second magnet when the catch member is in the engaged position. In a particularly preferred form of the invention, both poles of the first magnet are aligned with the poles of the second magnet when the catch member is in the engaged position, the alignment preferably being along or substantially parallel to a common axis.

In a preferred embodiment, the first magnet is a permanent magnet and the second magnet is an electromagnet. In this way, the second magnet may be switched between an activated and a deactivated state, and an orientation of the second magnet is preferably fixed or constant in the actuator of the door latching device.

Thus, the present invention is based on the integration and combination of magnetic actuator components within a door latch or door lock mechanism. To this end, the actuator may include permanent magnets and/or electromagnets. Preferably, however, the actuator of the latching device has a specific combination of both a permanent magnet and an electromagnet. By employing magnetic components in this way, the risk of jamming of the mechanical components due to wear, chaffing and/or misalignment can be substantially minimised.

In a preferred embodiment, the permanent magnet is adapted to pre-align the door in a closed position and may also act to hold the door in the closed position while the electromagnet is deactivated or unpowered. The electromagnet, on the other hand, is able to lock the door, and may also act to attract or align the door to the closed position if it is almost, but not fully closed. In a particularly preferred embodiment, the catch member is configured to interact with the latch member, i.e. during rotational movement from the disengaged position to the engaged position, to move the door into a fully closed position.

In a preferred embodiment of the device, the catch member is fixed on a rotatable mount and the mount preferably includes spring means, such as a torsional spring, for also biasing rotation of the catch member from the disengaged position to the engaged position. The door latching device may typically further comprise a housing which accommodates the rotatable catch member and the magnetic actuator, and the housing is designed to be mounted on or in a door frame adjacent a latch member at an edge of the door.

In a particularly preferred embodiment, the door latching device includes a control unit for controlling operation of the magnetic actuator. The door latching device may further include a sensor or detector means for sensing or detecting a position of the door and providing data on the position of the door to the control unit. In this way, the door latching device may be configured to provide a warning signal in the event that a door to a restricted zone remains open, i.e. not in the fully closed position, for any excessive time period. The warning signal may include a visual signal (e.g. a light flashing) or an aural signal (e.g. a bell or buzzer).

The advantages of the door latching device of the invention are several and include: an improved reliability and reduced noise emission, a reduction of electric power consumption in general, self-aligning of the door, holding of the door in a closed position while not unlocked, a high potential holding force, a scalable holding force, and the door latching device may be exchangeable with existing locks.

According to another aspect, the invention provides a door assembly comprising a door member which is pivotally movable with respect to a frame member between an open position and a closed position, and a door latching device of the invention as described above with respect to any of the embodiments, wherein the door latching device is mounted on or in the said frame member adjacent to an edge of the door member in the closed position.

According to a further aspect, the invention also provides an aircraft or spacecraft incorporating a door assembly or a door latching device of the invention as described above with respect to any one of the embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic plan view of a door latch device according to an embodiment of the invention in a latched and/or locked state;
- Fig. 2: is a schematic plan view of the door latch device of Fig. 1 in a self-aligning latching operation;
- Fig. 3: is a schematic perspective view of the door latch device of Fig. 1;
- Fig. 4: is a schematic view of a door assembly according to an embodiment of the invention; and
- Fig. 5: shows an aircraft according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as it accorded to such terms and expressions with respect to their corresponding respective areas of inquiry and study, except where specific meanings have otherwise been set forth herein.

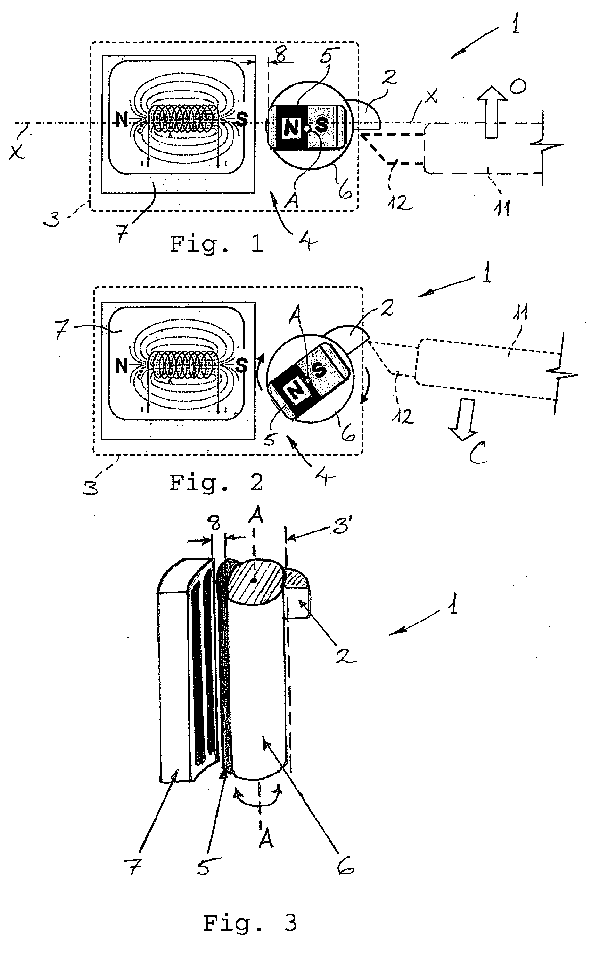

With reference to Fig. 1 of the drawings, a door latching device 1 according to a preferred embodiment is illustrated for holding a door 11 in a latched and optionally also locked state or condition. The door latching device 1 includes a rotatable catch member 2 which is mounted within a housing 3 of the device for rotational movement about a pivot axis A between an engaged position (as shown in Fig. 1) in which the catch member 2 projects from the housing 3 for engagement with a latch member 12 of the door 11, and a disengaged position, in which the catch member 2 is retracted away from engagement with the latch member 12 by rotation (see Fig. 2). The catch member 2 is in the form of a lug having a flat face for engaging the latch member 12 and a curved rear surface, although the lug 2 may have a variety of other shapes, such as angled, M- or U-shaped. The lug-like catch member 2 and the associated latch member 12 may be formed from a range of materials, including aluminium or titanium or alloys thereof, stainless steel, or a ferromagnetic material.

The door latching device 1 furthermore includes a magnetic actuator 4 for biasing or effecting a rotational movement of the catch member 2 about the pivot axis A from the disengaged position to the engaged position. In particular, the magnetic actuator 4 comprises a first magnet 5 provided in the form of a permanent magnet which is connected with the catch member 2 for rotation therewith about the axis A. That is, the catch member 2 is attached to and extends from a rotatable mount 6 and the first magnet 5 is similarly attached to the mount 6 for rotation with the catch member 2. To ensure the desired transfer of the magnetic field to catch member 2, the mount 6 can be formed from a range of materials, including aluminium or titanium or alloys thereof, stainless steel, or a ferromagnetic material too. The magnetic actuator 4 also includes a second magnet 7 arranged within the housing 3 and provided in the form of an electromagnet. This second magnet 7 is thus electrically switchable between an activated or energized state, in which it generates both a magnetic field and a magnetic force, and a deactivated or de-energized state. This second magnet 7 is non-movably fixed within the housing 3 such that it maintains a basically constant orientation and the North (N) and South (S) poles of the second magnet 7 are essentially aligned along, or parallel to, an axis X through the housing 3.

As is apparent from Fig. 1, the first magnet 5 is fixed with respect to the catch member 2 such that the North and South poles N, S of the first magnet 5 are substantially aligned with the poles N, S of the second magnet 7, i.e. parallel to or along the axis X, when the catch member 2 of the latching device 1 is in the engaged position. In this regard, opposing poles N, S of the respective first and second magnets 5, 7 are adjacent one another to interact via attractive magnetic forces. When the second magnet 7 (i.e. the electromagnet) is activated or energized, that second magnet 7 generates a magnetic force, which in turn biases the first magnet 5 to the engaged position shown in Fig. 1. In other words, the electromagnet 7 interacts with first magnet 5 (i.e. the permanent magnet) to hold the first magnet 5 in the aligned orientation shown in Fig. 1. In this way, the latching device 1 of the invention can be employed to lock the door 11 in the closed position. Even if the electromagnet 7 is deactivated or de-energized, however, the latching device 1 via the permanent magnet 5 and the catch member 2 will continue to hold the door 11 in the closed position. Accordingly, even in the event of a temporary power failure terminating current supply to the electromagnet 7, the door 11 will not simply fall open. In that case, however, the door would not be locked by the latching device 1 against opening. In this connection, it will noted that the rotatable mount 6 for the catch member 2 may incorporate spring means, such as a torsional spring member (not show), for additional elastic or resilient biasing of the rotatable catch member 2 towards the engaged position shown in Fig. 1.

In the event that the second magnet 7 is deactivated or de-energized, and a sufficient opening force in the direction of arrow O in Fig. 1 is applied to the door 11 to overcome the magnetic bias or attraction from the permanent magnet 5 and any optional torsion spring, the latch member 2 will bear against the catch member 12 of the latching device 1 and be rotated in the anti-clockwise direction (in Fig. 1) about the pivot axis A. In this way, the door 11 can be pivoted on its hinges from the closed position shown in Fig. 1 to an opened position permitting ingress and/or egress through the doorway opening.

With reference now to Fig. 2 of the drawings, as the door member 11 pivots back towards the closed position, e.g. under a resilient bias of return springs in the door hinges, the door latching device 1 is desirably configured to activate or energize the second magnet 7 (i.e. the electromagnet) as the door member 11 approaches the closed position. In the "almost closed" position, the effect of return springs in the door hinges tends to weaken and the latching device 1 can operate to self-align the door in the closed position. In particular, as the door member 11 approaches the closed position in the direction of arrow C at a point where the catch member 2, as it moves from the retracted, disengaged position back towards the engaged position, can contact or engage with the latch member 12 of the door, the electromagnet 7 may be activated or energized to generate a magnetic force that interacts with the permanent magnet 5 to rotate the catch member 2 to the engaged position shown in Fig. 1. To this end, the latching device 1 of the invention preferably includes a control unit (not shown) and optionally at least one sensor for detecting a position of the door, particularly an "almost closed" position of the door 11 in which the catch member 2 is able to engage with the latch member 12 as shown in Fig. 2. In this way, the misaligned door 11 can be brought into the fully closed position automatically (i.e. self-aligned) and locked by the electromagnet 7 in the activated or energized state. As an optional modification to this embodiment, the door latching device 1 of the invention could include an array of multiple electromagnets or coils 7 arranged to move the door in a step-wise manner or in phases towards the closed position.

Referring to Fig. 3 of the drawings, an embodiment of the door latching device 1 is shown with the main components in an isometric or perspective view, except the housing 3 which is essentially omitted but represented merely by an edge 3' thereof. As can be seen, the mount 6 for the lug-like catch member 2 is provided as a generally cylindrical element for pivoting movement about the axis A. Extending longitudinally along a side of the cylindrical mount 6 approx. diametrically opposite from the catch member 2 is the first magnet 5 (i.e. the permanent magnet). Spaced from the permanent magnet 5 by a small air gap 8 is the second magnet 7 (i.e. electromagnet) which also extends longitudinally and substantially parallel to the permanent magnet 5 and the cylindrical mount 6. The air gap 8 is preferably in a range of about 0,1 mm to 10 mm, and more preferably about 1 mm to 5 mm. The diameter of the cylindrical mount 6 could be scaled down to reduce a width of the actuator 4 as desired, and the height or length could be increased as necessary.

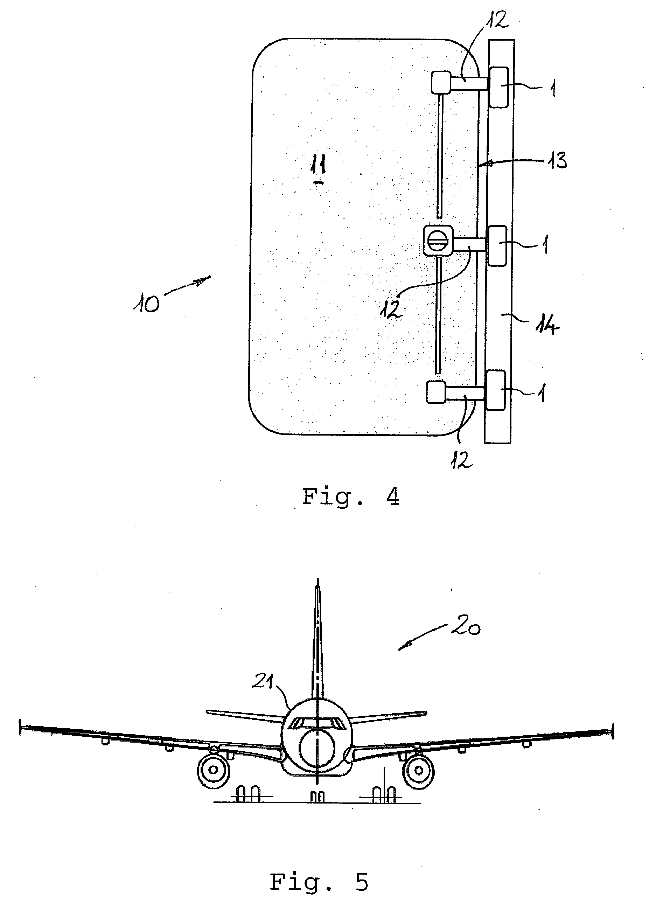

With reference now to Fig. 4 of the drawings, an embodiment of a door assembly 10 of the invention is seen schematically. In this embodiment, the door assembly 10 incorporates a door member 11 for hinged or pivoting movement between an open position (not shown) which permits passage (i.e. ingress and egress) through the associated doorway, and a closed position (shown in Fig. 4) in which latch members 12 provided spaced apart along an edge region 13 of the door member 11 engage with the catch members 2 of three respective door latching devices 1 of the invention. In this regard, the three door latching devices 1 are mounted on a frame member 14, such as a post, of the door assembly 10 so as to be adjacent to the respective latch members 12 at the edge region 13 of the door member 11 in the closed position. The embodiment of Fig. 4 is thus an example of door latching devices 1 employed as triple electromagnetic door locks. If the electromagnet 7 is not energized, the closed position of the door 11 is ensured by the permanent magnet 5 only and by the ferromagnetic core of the electromagnet. An operational end stop is usually provided by the frame member or post 14 and/or by the hinge (not shown) itself.

Due to the specific combination of the permanent magnet 5 and the electromagnet 7, the door latching device 1 is able to self-align the door 11 and maintain the door 11 closed while the device is not powered, and maintain the door locked and secured while electrically powered. Thus, even if the door 11 is misaligned (i.e. not fully closed), the latching device 1 is able to actively move the door 11 into the fully closed position. The catch member 2 should hereby at least partially be able to engage with the latch member 11. Even if not fully engaged (i.e. only partially engaged) it is possible move the door into the closed position and keep it locked. Movement of the door 11 into the closed position can be ensured by the spring loaded mount 6 and the permanent magnet 5, which can both actively close the door. However, the main self-aligning contribution is provided by the effect that the permanent magnet 5 and the powered electromagnet 7 dominantly align and orientate in the same direction, and this effect is scalable depending on the magnetic field strength.

Finally, an aircraft 20 which incorporates one or more door assembly 10 including at least one door latching device 1 of the invention as described in detail above with reference to Figs. 1 to 4 is shown schematically in Fig. 5. In particular, each door assembly 10 is typically incorporated in a frame structure of the aircraft fuselage 21 for controlling access to zones or compartments of the aircraft interior, such as to a cockpit, to lavatories, or to crew rest quarters.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: door latching device
- 2: catch member
- 3: housing
- 3': edge of housing
- 4: magnetic actuator
- 5: first magnet or permanent magnet
- 6: rotatable mount
- 7: second magnet or electromagnet
- 8: air gap
- 10: door assembly
- 11: door or door member
- 12: latch member
- 13: edge region of door
- 14: frame member or post
- 20: aircraft
- 21: fuselage
- A: pivot axis
- X: orientation axis

## Claims

1. A door latching device (1) for holding a door (11) in a latched and/or locked state, comprising:
a rotatable catch member (2) mounted for rotational movement between an engaged position, in which the catch member (2) projects for engagement with a latch member (12) of a door (11), and a disengaged position, in which the catch member (2) is retracted from engagement with the latch member (12); and
a magnetic actuator (4) connected with the catch member (2) for biasing or effecting rotational movement of the catch member (2) from the disengaged position to the engaged position.

2. A door latching device (1) according to claim 1, wherein the magnetic actuator (4) includes at least one first magnet (5), which is fixed with respect to the catch member (2) for rotation therewith, and at least one second magnet (7) which generates a magnetic force to bias or effect rotation of the catch member (2) from the disengaged position to the engaged position.

3. A door latching device (1) according to claim 2, wherein the first magnet (5) is fixed with respect to the catch member (2) such that at least one of the poles of the first magnet (5) is aligned with at least one of the poles of the second magnet (7) when the catch member (2) is in the engaged position.

4. A door latching device (1) according to claim 2 or 3, wherein the first magnet (5) is a permanent magnet and the second magnet (7) is an electromagnet, which is switchable between an activated state and a deactivated state, wherein an orientation of the second magnet (7) is constant or fixed within the actuator (4) of the door latching device (1).

5. A door latching device (1) according to any one of the preceding claims, wherein the catch member (2) is fixed on a rotatable mount (6), wherein the mount (6) includes spring means, preferably a torsional spring, for biasing rotation of the catch member (2) from the disengaged position to the engaged position.

6. A door latching device (1) according to any one of the preceding claims, wherein, during rotational movement from the disengaged position to the engaged position, the catch member (2) is configured to interact with the latch member (12) of the door (11) to move the door (11) into a fully closed position.

7. A door latching device (1) according to any one of the preceding claims, further comprising a housing (3) which accommodates the rotatable catch member (2) and the magnetic actuator (4), wherein the housing (3) is to be mounted on or in a door frame (14) adjacent to a latch member (12) at an edge (13) of a door (11).

8. A door latching device (1) according to any one of the preceding claims, comprising a plurality of first magnets (5) and/or a plurality second magnets (5) spaced along a pivot axis (A) of the catch member (2).

9. A door assembly (10) comprising a door member (11) which is pivotally movable with respect to a frame member (14) between an open position and a closed position, and a door latching device (1) according to any one of the preceding claims, wherein the door latching device (1) is mounted on or in the frame member (14) adjacent an edge (13) of the door member (11) in a closed position.

10. An aircraft or spacecraft (20) having a door assembly (10) according to claim 9.
